# EUROPÄISCHE PATENTSCHRIFT

(11) **EP 2 112 025 B1**
(45) Veröffentlichungstag und Bekanntmachung des Hinweises auf die Patenterteilung: **26.09.2012**
(21) Anmeldenummer: 08007826.4
(22) Anmeldetag: 23.04.2008
(51) Int. Cl.: B60R 21/04, B60R 13/02, B29C 45/00, B29C 45/56, B32B 27/00, B29C 45/16

(54) **Innenverkleidungsbauteil für Kraftfahrzeuge**
Interior cladding component for motor vehicles
Composant d'habillage intérieur pour véhicules automobiles

(43) Veröffentlichungstag der Anmeldung: 28.10.2009
(73) Patentinhaber: SMP Deutschland GmbH, 79268 Bötzingen (DE); Audi AG, 85045 Ingolstadt (DE)
(72) Erfinder: Bianchi, Willi, 21339 Lüneburg (DE); ROTTE Manfred, 85055 Ingoldstadt (DE); SALZER Johann, 85053 Ingoldstadt (DE); STRIGL Raimund, 85084 Reichertshofen (DE); MERK Thomas, 86609 Donauwörth (DE)
(74) Vertreter: Neunert, Peter Andreas

(56) Entgegenhaltungen:
- EP-A- 1 844 978
- DE-A1- 3 026 736
- DE-A1- 4 140 706
- DE-A1- 19 625 295
- DE-A1-102006 049 696
- FR-A- 2 797 669
- GB-A- 2 070 425

## Beschreibung

Die vorliegende Erfindung betrifft ein Innenverkleidungsbauteil für Kraftfahrzeuge mit den Merkmalen des Oberbegriffs des Anspruchs 1 sowie ein Verfahren zur Herstellung eines Innenverkleidungsbauteils für Kraftfahrzeuge mit den Merkmalen des Oberbegriffs des Anspruchs 12.

Verfahren zur Herstellung von Innenverkleidungsbauteilen für Kraftfahrzeuge, wie z.B. Armaturentafeln, Tür-, Seiten- oder Säulenverkleidungen oder auch Armlehnen etc., sind aus zahlreichen Schriften bekannt. Heutzutage bestehen derartige Verkleidungsbauteile häufig aus thermoplastischen Kunststoffen, die über Spritzgießverfahren verarbeitet werden. Auf diese Weise werden in der Regel die Trägerelemente der Innenverkleidungsbauteile hergestellt, deren Haptik und Optik anschließend durch weitere Bearbeitungsschritte, wie z.B. das Aufbringen einer Dekorschicht oder einer Schaumschicht, ihrem Verwendungszweck angepasst werden.

Dabei haben die Innenverkleidungsbauteile häufig nicht nur die Funktion, Bereiche abzudecken, sondern dienen gleichzeitig als Auflage oder Ablage, wobei diese Funktionen dazu führen, dass Bereiche der Innenverkleidungsbauteile in den Fahrzeuginnenraum hineinragen, damit sie ihrer Funktion gerecht werden können. Als typisches Beispiel für derartige Innenverkleidungsbauteile oder Bereiche von derartigen Innenverkleidungsbauteilen sind Armlehnen zu nennen, die als Aufbauten an den Seitenwänden in den Fahrzeuginnenraum hineinragen.

Derartige Innenverkleidungsbauteile mit von der Karosserieseite her abstehenden Bereichen besitzen den Mangel, dass diese Bereiche bei Fahrzeugunfällen geradezu dafür prädestiniert sind, Stoßverletzungen herbeizuführen, da sie in der Regel aus relativ formstabilen Materialien hergestellt sind. Häufig bestehen diese Bauteile aus einem harten Kern, der möglicherweise dann zwar mit einer Schaumschicht oder einer sonstigen Polsterung umgeben ist, wobei diese Polsterung jedoch nicht ausreicht, um einen Aufprall ausreichend zu dämpfen. So kann beispielsweise eine Armlehne bei einem seitlichen Crash zu erheblichen Verletzungen, wie z.B. Prellungen, Quetschungen und Knochenbrüche im Knie- und Hüftbereich führen.

In der DE 3 026 736 A werden Ausrüstungsteile für Kraftfahrzeuge, wie Seitenwand, Tür- oder Säulenverkleidungselemente, Armaturentafeln, Armlehnen oder dergleichen, beschrieben, die zumindest einen von der anschlussseitigen Karosseriewand abstehenden Bereich aufweisen, der hohl ausgebildet ist. Um Verletzungen der Fahrzeuginsassen im Falle eines Unfalls durch diese Elemente zu vermeiden, hat man in diesen Bereichen Sollbruchstellen ausgebildet, die im Falle eines Aufpralls ein Nachgeben bzw. ein Ausweichen des betreffenden Verkleidungselementes ermöglichen sollen. Dabei sind Zonen verringerter Wanddicke durch Kerben ausgebildet, deren Öffnungsspalt im Wesentlichen zur allgemeinen Anlagefläche des entsprechenden Ausrüstungsteils hin ausgerichtet ist. Ein Nachteil der oben geschilderten Anordnung besteht darin, dass der hervorstehende Bereich im Falle eines Aufpralls zwar teleskopartig zwischen den Kerben ineinandergeschachtelt werden soll, jedoch besteht insbesondere bei spröden und harten Materialien die Gefahr, dass relativ scharfe Kanten entstehen, die dann zu Verletzungen führen können.

In der DE 41 40 706 A1 werden Armlehnen beschrieben, die eine Vielzahl von Scharnieren und Sollbruchlinien an ihrer Innenfläche aufweisen, die so angeordnet sind, dass die Armlehnen bei einer Druckbelastung senkrecht zur Befestigungsfläche teleskopartig verschiebbar sind. Die Armlehnen nach der D2 sind ähnlich wie die in der D1 beschriebenen Armlehnen aufgebaut und auch hier besteht insbesondere bei der Verwerdung von spröden und harten Materialien die Gefahr, dass relativ scharfe Kanten entstehen, die dann zu Verletzungen führen können.

Aufgabe der vorliegenden Erfindung ist es somit, ein Innenverkleidungsbauteil für Kraftfahrzeuge mit mindestens einem von der Karosserieseite her abstehenden, in den Fahrzeuginnenraum hineinragenden Bereich zur Verfügung zu stellen, das den Nachteil des Standes der Technik nicht aufweist.

Gelöst wird die Aufgabe durch ein Innenverkleidungsbauteil mit den Merkmalen des Anspruchs 1. Vorteilhafte Ausgestaltungen und Weiterentwicklungen des Innenverkleidungsbauteils sind Gegenstand der entsprechenden Unteransprüche.

Aufgabe der vorliegenden Erfindung ist es auch, ein Verfahren zur Herstellung eines derartigem Innenverkleidungsbauteils zur Verfügung zu stellen, mit dem es möglich ist, ein Innenverkleidungsbauteil herzustellen, das die Nachteile des Standes der Technik nicht aufweist.

Gelöst wird diese Aufgabe durch ein Verfahren mit den Merkmalen des Anspruchs 10. Vorteilhafte Ausgestaltungen und Weiterentwicklungen des Verfahrens sind in den Unteransprüchen 11 und 12 wiedergegeben.

Das erfindungsgemäße Innenverkleidungsbauteil für Kraftfahrzeuge besitzt mindestens einen von der Karosserieseite abstehenden, in den Fahrzeuginnenraum hineinragenden Bereich. Derartige Bereiche, die meist die Funktion einer Ablage oder ei ner Auflage besitzen, sind üblicherweise zur Karosserieseite hin hohl ausgebildet. Dabei besteht das Innenverkleidungsbauteil in der Regel aus einem Träger, einer Schaumschicht und einer Dekorschicht, wobei die Dekorschicht die Sichtseite des Innenverkleidungsbauteils bildet und die Schaumschicht üblicherweise zwischen Träger und Dekorschicht angeordnet ist, so dass der Träger den Abschluss zur Karosserie hin bildet. Erfindungswesentlich ist nun, dass der Träger kaskadenförmig aufgebaut ist, wobei sich die Kaskade zur Karosserieseite erweitert und im Bereich der Absätze der einzelnen Stufen der Kaskade Sollbruchstellen angeordnet sind. Zur Sichtseite des Innenverkleidungsbauteils hin werden die Kaskaden durch eine Schaumschicht ausgeglichen, mit deren Hilfe dem entsprechenden Bereich des Innenverkleidungsbauteils die gewünschte äußere Form verliehen wird. Die Schaumschicht wird zur Sichtseite hin mit einer Dekorschicht abgeschlossen. Die Sollbruchstellen selber sind im Träger als Bereiche mit verringerter Wandstärke ausgebildet, wobei die Wandstärken erfindungsgemäß zwischen ca. 0.1 mm und 0.3 mm liegen. Diese Wandstärken sollen im Träger nach Möglichkeit bereits im Spritzgießprozess realisiert werden, was an den Spritzgießprozess besondere Anforderungen stellt, da derart dünne Wandstärken, insbesondere wenn sie sich über größere Bereiche erstrecken mit einem einfachen Spritzgießwerkzeug nur schwer zu realisieren sind. Somit müssen beim Spritzgießprozess die Verfahrensparameter sehr exakt eingehalten werden, damit kein Ausschuss produziert wird.

Erfindungsgemäß ist vorgesehen, dass die Breite der Bereiche mit verringerter Wandstärke ca. 1 mm bis 10 mm beträgt. Bei einer derart geringen Restwandstärke über einen solch breiten Bereich besteht die Gefahr, dass die Spritzgießform nicht vollständig gefüllt wird und in dem Bereich der vorgesehenen Sollbruchstellen im Träger Fehler in Form von Löchern auftreten, die unerwünscht sind, da beim Überschäumen des Trägers die Gefahr besteht, dass an diesen Stellen der Schaum durchtritt, was zu Verklebungen im Werkzeug führen könnte.

Deshalb wird in einer vorteilhaften Ausgestaltung des erfindungsgemäßen Verfahrens zur Herstellung eines Innenverkleidungsbauteils der Träger in einem Spritzgießwerkzeug hergestellt, dass einen oder mehrere integrierte Schieber aufweist, wobei mit Hilfe der Schieber während des Spritzgießprozesses die Kavität in den Bereichen der späteren Sollbruchstellen soweit verengt wird, dass nach dem Spritzgießvorgang an diesen Stellen lediglich eine dünne Schwimmhaut von ca. 0.1 mm bis 0.3 mm Wandstärke vorhanden ist. Dieses System mit den Schiebern hat den Vorteil, dass nun keine Gefahr mehr besteht, dass die Kavität nicht vollständig gefüllt sein könnte, da während der ersten Injektionsphase die Kavität des Spritzgießwerkzeugs so ausgelegt ist, dass das Werkzeug problemlos verfüllt werden kann, und erst während des Formgebungsprozesses selber die Kavität im Bereich der späteren Sollbruchstellen mit Hilfe des Schiebers verengt wird.

Nachdem der Spritzgießprozess abgeschlossen ist, wird der Träger dem Spritzgießwerkzeug entnommen und in ein Schäumwerkzeug eingelegt, um dort mit Schaum beschichtet zu werden. Üblicherweise wird bei diesem Prozessschritt gleichzeitig mit dem Träger eine Formhaut in das Schäumwerkzeug eingelegt und es wird die zwischen Formhaut und Träger ausgebildete Kavität ausgeschäumt. Dabei entspricht die Formhaut der späteren Dekorschicht, die die Sichtseite des Innenverkleidungsbauteils bildet.

Es besteht jedoch auch die Möglichkeit, den Schäumprozess so zu führen, dass der Schaum eine kompakte Außenhaut ausbildet, die direkt als Dekorschicht dient. In diesem Fall wird als Schaum ein mit einem Treibmittel beladenes thermoplastisches Elastomer aus der Gruppe Polyurethan (PU), Polypropylen (PP), Polyethylen (PE) oder Polyamid (PA) eingesetzt und das Schäumwerkzeug selber besitzt eine expandierbare Kavität, so dass sich aus einem Grundmaterial mehrere Schichten ausbilden können.

Eine vorteilhafte Ausgestaltung des Schäumprozesses sieht vor, dass im Schäumwerkzeug ein Stanzschieber integriert ist, mit dessen Hilfe die im Spritzgießwerkzeug ausgebildeten Schwachstellen im Bereich des Trägers während des Überschäumens des durchstoßen werden. Der Durchstoßvorgang erfolgt jedoch erst nach Ende der Abbindzeit des Schaumsystems, bevor das Werkzeug geöffnet wird, so dass ein Überfluten des Trägers mit Schaum vermieden wird. Dieses zusätzliche Durchstoßen des Trägers bedeutet keine Verlängerung der Entformzeit, da der Stanzvorgang zwischen Abbindezeit und Entformzeit durchgeführt wird. Während des Schäumprozesses selber sind somit die Sollbruchstellen noch geschlossen und es kann prozesssicher geschäumt werden, während anschließend die Schwachstellen zumindest teilweise mit dem Stanzer durchstoßen werden. Eine vorteilhafte Ausgestaltung des Schäumwerkzeugs sieht vor, dass ein eingebautes, mittels Schieber ausfahrbares Stanzmesser im Oberstempel des Schäumwerkzeugs integriert ist.

Als Material für den Träger werden üblicherweise thermoplastische Kunststoffe aus der Gruppe Polypropylen (PP), Polyethylen (PE), Polybutylenterephthalat (PBT), Polyamid (PA), Polystyrol (PS), Polycarbonat (PC), Polymethylmethacrylat (PMMA), Acrylnitril-Butadien-Styrol (ABS), Acrylnitril-Butadien-Styrol/Polycarbonat - Copolymerisat (ABS-PC) oder Polyoxymethylen (POM) eingesetzt. Der Kunststoff kann zusätzlich durch Einbau von Fasern verstärkt werden, wobei Glasfasern oder textile Naturfasern in Frage kommen.

Die Dekorschicht ist in der Regel eine Formhaut aus thermoplastischem Elastomer aus der Gruppe Polyurethan (PU), Polypropylen (PP), Polyethylen (PE), Polyamid (PA) oder Polyvinylchlorid (PVC).

Die Schaumschicht besteht meist aus einem Kunststoff aus der Gruppe Polyurethan (PU), Polypropylen (PP) oder Polyethylen (PE).

Je nach Verwendungszweck des Innenverkleidungsbauteils kann die Schaumschicht auch in mehreren Schichten aufgebaut sein, wobei die physikalischen Eigenschaften der Schichten dem Verwendungszweck angepasst werden. So kann beispielsweise bei der Herstellung einer Armlehne im Bereich der Armauflage direkt unterhalb der Dekorschicht eine äußere Schaumschicht vorgesehen sein, die weniger hart ist als die innere Schaumschicht, um auf diese Weise die Haptik des Bauteils zu verbessern.

Im Folgenden wird die vorliegende Erfindung anhand einer Zeichnung erläutert.

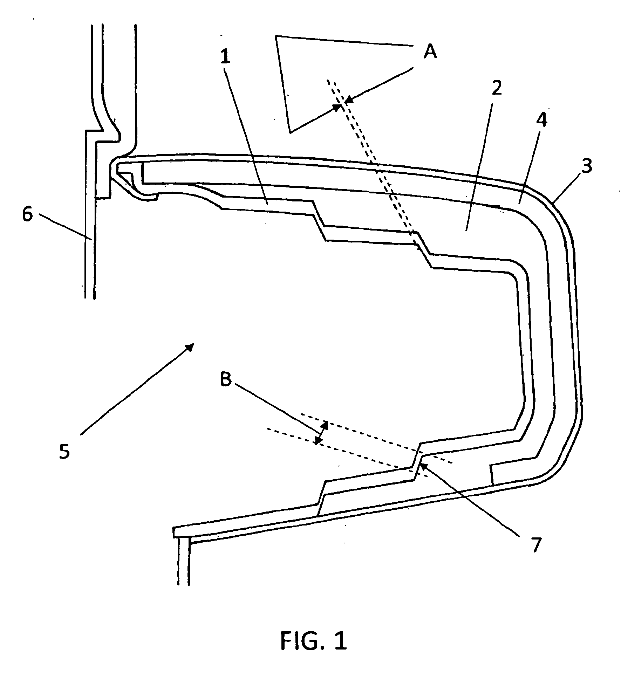

Die Figur 1 zeigt einen Ausschnitt aus einem Seitenverkleidungsbauteil mit integrierter Armlehne im Querschnitt.

Die Figur 1 macht deutlich, dass der kaskadenförmige Träger 1 der charakteristische Bereich des erfindungsgemäßen Innenverkleidungsbauteils ist. Dieser Bereich ist im Wesentlichen hohl ausgebildet, wobei sich der Träger 1 direkt an den Hohlraum 5 anschließt, gefolgt von der Schaumschicht 2, die im vorliegenden Fall eine zweite Schaumschicht 4 beinhaltet, wobei die Schaumschicht 4 als Schicht mit besonderen haptischen Eigenschaften in den Bereichen der Armauflage oder den sonstigen Berührungsbereichen ausgebildet ist. Die Sichtseite wird von der Dekorschicht 3 ausgebildet, die das Innenverkleidungsbauteil zum Fahrzeuginneren hin abschließt. Auffallend ist der treppenförmige Aufbau des Trägers mit den einzelnen, relativ breiten Stufen 7, die den Verschwächungsbereich bilden, wobei der Verschwächungsbereich eine Breite (B) zwischen ca. 1 mm und 10 mm aufweist und eine Wandstärke (A), die nur zwischen ca. 0.1 mm und 0.3 mm liegt. Durch den stufenförmigen Aufbau mit relativ breiten Stufen ist gewährleistet, dass im Falle eines Crashes die einzelnen Stufen des Trägers bzw. des Bauteils bis hin zur Karosserie 6 ineinander in den Hohlraum 5 hineingeschoben werden können, ohne dass dabei irgendwelche scharfen Kanten entstehen, die zusätzliches Verletzungspotential mit sich bringen könnten.

Die Figur 1 zeigt als Beispiel für die vorliegende Erfindung eine Armlehne als Teil eines Innenverkleidungsbauteils, worin jedoch keine Einschränkung der Erfindung zu sehen ist. Der bei der Armlehne vorgestellte kaskadenförmige Aufbau ist für jedes Innenverkleidungsbauteil geeignet, das mindestens teilweise in den Fahrzeuginnenraum hineinragt und dabei einen Hohlraum ausbildet, in den die einzelnen Stufen eines kaskadenförmigen Trägers hineingeschoben werden können.

Auch zeigt die Figur 1 einen Verschwächungsbereich 7 bzw. einen Sollbruchbereich, der als dünne Schwimmhaut im Träger ausgebildet ist. Eine vorteilhafte Ausgestaltung der Erfindung sieht darüber hinaus vor, dass die dünne Schwimmhaut des Trägers im Bereich der Stufen 7 durchstoßen ist, wodurch der Sollbruchmechanismus im Falle eines Crashes zusätzlich gefördert wird.

Bezugszeichenliste
- 1: Träger
- 2: erste Schaumschicht
- 3: Dekorschicht
- 4: zweite Schaumschicht
- 5: Hohlraum
- 6: Karosserie
- 7: Stufe (Sollbruchstelle)
- A: Stärke der Sollbruchstelle im Träger
- B: Breite der Sollbruchstelle im Träger

## Patentansprüche

1. Innenverkleidungsbauteil für Kraftfahrzeuge mit mindestens einem von einer Karosserieseite (6) abstehenden, in den Fahrzeuginnenraum hineinragenden Bereich, der zur Karosserieseite (6) hin im Wesentlichen hohl ausgebildet ist, wobei das Innenverkleidungsbauteil, ausgehend von der Karosserieseite, im Wesentlichen aus einem Träger (1), einer Schaumschicht (2) und einer Dekorschicht (3) aufgebaut ist, wobei die Dekorschicht (3) die Sichtseite des Innenverkleidungsbauteils bildet und die Schaumschicht (2) zwischen Träger (1) und Dekorschicht (3) angeordnet ist, wobei der Träger (1) in seinem in den Fahrzeuginnenraum hineinragenden Bereich Sollbruchstellen aufweist, wobei der Träger (1) in dem in den Fahrzeuginnenraum hineinragenden Bereich des Innenverkleidungsbauteils in Form einer sich zur Karosserieseite (6) hin erweiternden Kaskade aufgebaut ist,
**dadurch gekennzeichnet, dass** die Sollbruchstellen (7) die Absätze der einzelnen Stufen der Kaskade bilden, die Sollbruchstellen (7) als Bereiche des Trägers (1) mit verringerter Wandstärke ausgebildet sind, und die Schaumschicht in mehreren Schichten aufgebaut ist, wobei die physikalischen Eigenschaften der Schichten dem Verwendungszweck angepasst sind.

2. Innenverkleidungsbauteil nach Anspruch 1,
**dadurch gekennzeichnet, dass** die Bereiche mit verringerter Wandstärke zumindest teilweise durchstoßen sind.

3. Innenverkleidungsbauteil nach einem der Ansprüche 1 bis 2,
**dadurch gekennzeichnet, dass**
der in den Fahrzeuginnenraum hineinragende Bereich des Innenverkleidungsbauteils eine Armlehne ist.

4. Innenverkleidungsbauteil nach einem der Ansprüche 1 bis 3,
**dadurch gekennzeichnet, dass**
die Bereiche mit verringerter Wandstärke eine Restwandstärke (A) von ca. 0.1 mm bis ca. 0.3 mm und eine Breite (B) von ca. 1 mm bis ca. 10 mm auf weisen.

5. Innenverkleidungsbauteil nach einem der Ansprüche 1 bis 4,
**dadurch gekennzeichnet, dass**
der Träger (1) aus einem thermoplastischen Kunststoff aus der Gruppe Polypropylen (PP), Polyethylen (PE), Polybutylenterephthalat (PBT), Polyamid (PA), Polystyrol (PS), Polycarbonat (PC), Polymethylmethacrylat (PMMA), Acrylnitril-Butadien-Styrol (ABS), Acrylnitril-Butadien-Styrol / Polycarbonat - Copolymerisat (ABS-PC) oder Polyoxymethylen (POM) besteht.

6. Innenverkleidungsbauteil nach einem der Ansprüche 1 bis 5,
**dadurch gekennzeichnet, dass**
der Träger (1) mit Fasern, ausgewählt aus der Gruppe Glasfasern oder textile Naturfasern verstärkt ist.

7. Innenverkleidungsbauteil nach einem der Ansprüche 1 bis 6,
**dadurch gekennzeichnet, dass**
die Dekorschicht (3) eine Formhaut aus einem thermoplastischen Elastomer aus der Gruppe Polyurethan (PU), Polypropylen (PP), Polyethylen (PE), Polyamid (PA) oder Polyvinylchlorid (PVC) ist.

8. Innenverkleidungsbauteil nach einem der Ansprüche 1 bis 7,
**dadurch gekennzeichnet, dass**
die Schaumschicht (2) aus einem Kunststoff aus der Gruppe Polyurethan (PU), Polypropylen (PP) oder Polyethylen (PE) besteht.

9. Innenverkleidungsbauteil nach einem der Ansprüche 1 bis 8,
**dadurch gekennzeichnet, dass**
die Schaumschicht (2) und Dekorschicht (3) aus einem thermoplastischen Elastomer aus der Gruppe Polyurethan (PU), Polypropylen (PP), Polyethylen (PE) oder Polyamid (PA) bestehen.

10. Innenverkleidungsbauteil nach einem der Ansprüche 1 bis 9,
**dadurch gekennzeichnet, dass**
die Schaumschicht (2) mehrere Schichten aufweist.

11. Verfahren zur Herstellung eines Innenverkleidungsbauteils nach einem der Ansprüche 1 bis 9 mit den Schritten
- Spritzgießen des Trägers (1) in einem Spritzgießwerkzeug,
- Einlegen und Fixieren des spritzgegossenen Trägers (1) in einem Schäumwerkzeug und
- Ausschäumen der Kavität des Schäumwerkzeuges,
**dadurch gekennzeichnet, dass**
beim Spritzgießen im Träger (1) Bereiche mit verringerter Wandstärke für Sollbruchstellen (7) ausgebildet werden.

12. Verfahren nach Anspruch 11,
**dadurch gekennzeichnet, dass**
die Bereiche mit verringerter Wandstärke im Spritzgießwerkzeug mit Hilfe mindestens eines im Spritzgießwerkzeug integrierten Schiebers ausgebildet werden.

13. Verfahren nach Anspruch 11 oder 12,
**dadurch gekennzeichnet, dass**
die Bereiche mit verringerter Wandstärke im Schäumwerkzeug nach dem Überschäumen des Trägers (1) nach oder kurz vor dem Ende des Abbindens des Schaums mit Hilfe mindestens eines im Schäumwerkzeug integrierten Stanzschiebers zumindest teilweise durchstoßen werden.

## Claims

1. An interior lining component for motor vehicles with at least one region which projects from a side (6) of the bodywork and projects into the interior of the vehicle and which is made substantially concave towards the side (6) of the bodywork, wherein the interior lining component, starting from the side of the bodywork, is formed essentially from a carrier (1), a foam layer (2) and a decorative layer (3), wherein the decorative layer (3) forms the visible side of the interior lining component and the foam layer (2) is arranged between the carrier (1) and the decorative layer (3), wherein the carrier (1) has pre-determined breaking points in its region projecting into the interior of the vehicle, wherein the carrier (1) is designed in the form of a cascade increasing towards the side (6) of the bodywork in the region of the interior lining component projecting into the interior of the vehicle, **characterized in that** the pre-determined breaking points (7) form the offsets of the individual steps of the cascade, the pre-determined breaking points (7) being designed in the form of regions of the carrier (1) with a reduced wall thickness, and the foam layer is formed in a plurality of layers, wherein the physical properties of the layers are adapted to the purpose of application.

2. An interior lining component according to claim 1, **characterized in that** the regions of reduced wall thickness are perforated at least in part.

3. An interior lining component according to one of claims 1 to 2, **characterized in that** the region of the interior lining component projecting into the interior of the vehicle is an armrest.

4. An interior lining component according to any one of claims 1 to 3, **characterized in that** the regions of reduced wall thickness have a residual wall thickness (A) of from approximately 0.1 mm to approximately 0.3 mm and a width (B) of from approximately 1 mm to approximately 10 mm.

5. An interior lining component according to any one of claims 1 to [4?], **characterized in that** the carrier (1) consists of a thermoplastic material from the group of polypropylene (PP), polyethylene (PE), polybutylene terephthalate (PBT), polyamide (PA), polystyrene (PS), polycarbonate (PC), polymethyl methacrylate (PMMA), acrylonitrile butadiene styrene (ABS), acrylonitrile butadiene styrene /polycarbonate copolymerizate (ABS-PC) or polyoxymethylene (POM).

6. An interior lining component according to any one of claims 1 to 5, **characterized in that** the carrier (1) is reinforced with fibres selected from the group of glass fibres or textile natural fibres.

7. An interior lining component according to any one of claims 1 to 6, **characterized in that** the decorative layer (3) is a moulded skin of a thermoplastic elastomer from the group of polyurethane (PU), polypropylene (PP), polyethylene (PE), polyamide (PA) or polyvinyl chloride (PVC).

8. An interior lining component according to any one of claims 1 to 7, **characterized in that** the foam layer (2) consists of a plastics material of the group of polyurethane (PU), polypropylene (PP) or polyethylene (PE).

9. An interior lining component according to any one of claims 1 to 8, **characterized in that** the foam layer (2) and the decorative layer (3) consist of a thermoplastic elastomer from the group of polyurethane (PU), polypropylene (PP), polyethylene (PE) or polyamide (PA).

10. An interior lining component according to any one of claims 1 to 9, **characterized in that** the foam layer (2) has a plurality of layers.

11. A method of producing an interior lining component according to any one of claims 1 to 9 with the steps
- injection-moulding the carrier (1) in an injection-moulding tool,
- inserting and fixing the injection-moulded carrier (1) in a foaming tool and
- foam-filling the cavity of the foaming tool, **characterized in that** during the injection-moulding in the carrier (1) regions of reduced wall thickness are formed for pre-determined breaking points (7).

12. A method according to claim 11, **characterized in that** the regions of reduced wall thickness are formed in the injection-moulding tool with the aid of at least one pusher integrated into the injection-moulding tool.

13. A method according to claim 11 or 12, **characterized in that** the regions of reduced wall thickness are perforated at least in part in the foaming tool after the foaming-over of the carrier (1) after or shortly before the end of the setting of the foam with the aid of at least one stamping pusher integrated into the foaming tool.

## Revendications

1. Elément d'habillage interne pour véhicule automobile comportant au moins une zone située à distance d'une face (6) de la carrosserie et pénétrant dans l'espace interne du véhicule, qui est réalisée, essentiellement creuse, en direction de la face (6) de la carrosserie, cet élément d'habillage interne étant essentiellement, constitué en partant de la face de la carrosserie d'un support (1), d'une couche alvéolaire (2) et d'une couche de décoration (3), la couche de décoration (3) formant la face visible de l'élément d'habillage interne et la couche alvéolaire (2) étant située entre le support (1) et la couche de décoration (3), le support (1) étant équipé de points de rupture de consigne, dans sa zone pénétrant dans l'espace interne du véhicule et étant réalisé, dans la zone de l'élément d'habillage interne pénétrant dans l'espace interne du véhicule sous une forme en cascade s'élargissant vers la face (6) de la carrosserie,
**caractérisé en ce que**
les points de rupture de consigne (7) forment les talons des différents gradins de la cascade, et sont réalisés sous la forme de zones du support (1) ayant une épaisseur de paroi diminuée et la couche alvéolaire est réalisée en plusieurs couches, les propriétés physiques de ces couches étant adaptées au domaine d'utilisation.

2. Elément d'habillage interne conforme à la revendication 1,
**caractérisé en ce que**
les zones ayant une épaisseur de paroi diminuée sont au moins partiellement percées.

3. Elément d'habillage interne conforme à l'une des revendications 1 et 2,
**caractérisé en ce que**
la zone de l'élément d'habillage interne pénétrant dans l'espace interne du véhicule est un accoudoir.

4. Elément d'habillage interne conforme à l'une des revendications 1 à 3,
**caractérisé en ce que**
les zones ayant une épaisseur de paroi diminuée présentent une épaisseur de paroi résiduelle (A) d'environ 0,1 mm à environ 0,3 mm et une largeur (B) d'environ 1 mm à environ 10 mm.

5. Elément d'habillage interne conforme à l'une des revendications 1 à 4,
**caractérisé en ce que**
le support (1) est réalisé en une matière synthétique thermoplastique choisie dans le groupe formé par le polypropylène (PP), le polyéthylène (PE), le poly-butylène-téréphtalate (PBT), le polyamide (PA), le polystyrène (PS), le polycarbonate (PC), le poly-méthyl-méthacrylate (PMMA), l'acrylonitrile-butadiène-styrène (ABS), le copolymère acrylonitrile-butadiène-styrène/polycarbonate (ABS/PC) ou le poly-oxy-méthylène (POM).

6. Elément d'habillage interne conforme à l'une des revendications 1 à 5,
**caractérisé en ce que**
le support (1) est renforcé par des fibres choisies dans le groupe des fibres de verre et des fibres textiles naturelles.

7. Elément d'habillage interne conforme à l'une des revendications 1 à 6,
**caractérisé en ce que**
la couche de décoration (3) est une peau de moulage en un élastomère thermoplastique choisi dans le groupe formé par le poly uréthane (PU), le poly propylène (PP), le poly éthylène (PE), le poly amide (PA) ou le chlorure de polyvinyle (PVC).

8. Elément d'habillage interne conforme à l'une des revendications 1 à 7,
**caractérisé en ce que**
la couche alvéolaire (2) est réalisée en un matériau synthétique choisi dans le groupe formé par le poly uréthane (PU), le poly propylène (PP) ou le poly éthylène (PE).

9. Elément d'habillage interne conforme à l'une des revendications 1 à 8,
**caractérisé en ce que**
la couche alvéolaire (2) et la couche de décoration (3) sont réalisées en un élastomère thermoplastique choisi dans le groupe formé par le poly uréthane (PU), le poly propylène (PP), le poly éthylène (PE) et le poly amide (PA).

10. Elément d'habillage interne conforme à l'une des revendications 1 à 9,
**caractérisé en ce que**
la couche alvéolaire (2) comporte plusieurs couches.

11. Procédé d'obtention d'un élément d'habillage interne conforme à l'une des revendications 1 à 9, comportant les étapes consistant à :
- mouler le support (1) par injection dans un outil de moulage par injection,
- insérer et fixer le support (1) moulé par injection dans un outil de formation d'une mousse, et
- former une mousse dans la cavité de ce moule,
**caractérisé en ce que**
lors du moulage par injection on forme dans le support (1) des zones ayant une épaisseur de paroi diminuée pour l'obtention de points de rupture de consigne (7).

12. Procédé conforme à la revendication 11,
**caractérisé en ce que**
les zones ayant une épaisseur de paroi diminuée sont formées dans l'outil de moulage par injection à l'aide d'au moins un coulisseau intégré dans cet outil de moulage par injection.

13. Procédé conforme à la revendication 11 ou 12,
**caractérisé en ce que**
les zones ayant une épaisseur de paroi diminuée sont percées au moins partiellement dans l'outil de formation d'une mousse, après le recouvrement du support (1) par une telle mousse, après ou peu avant la fin de la polymérisation de celle-ci, ce à l'aide d'au moins un coulisseau perforateur intégré dans l'outil de formation d'une mousse.
